# EUROPEAN PATENT APPLICATION

(11) **EP 4 564 519 A1**
(43) Date of publication of application: **04.06.2025**
(21) Application number: 23845037.3
(22) Date of filing: 26.05.2023
(51) Int. Cl.: H01M 10/44, H01M 10/48, H02J 7/00

(54) **METHOD AND DEVICE FOR COLLABORATIVE CHARGING OF BATTERY PACKS, AND COMPUTER-READABLE STORAGE MEDIUM**

(30) Priority: 26.07.2022 CN 202210895531
(71) Applicant: Ehang Intelligent Equipment (Guangzhou) Co., Ltd., Guangzhou, Guangdong 510000 (CN)
(72) Inventor: HU, Huazhi, Guangzhou, Guangdong 510000 (CN); XIAO, Xiji, Guangzhou, Guangdong 510000 (CN)
(74) Representative: Zaboliene, Reda
(86) International application number: PCT/CN2023/096484
(87) International publication number: WO 2024/021823

(57) **Abstract**

The present disclosure discloses a collaborative battery pack charging method, device, and computer-readable storage medium. The method includes: (S1) when the battery packs are connected to a charger, calculating charging requirement of the battery packs through state data of the battery packs collected by a charging control module, and obtaining parameter data of the battery packs; (S2) when the battery packs are in a normal working state, detecting whether specification data of the battery packs match the parameter data, and when matched, controlling activation of a charging switch for each battery pack according to mutual relationships of respective voltages of the battery packs; (S3) detecting and adjusting a total charging current for all battery packs and a charging current for each battery pack according to calculated aggregated current requirement. The present disclosure effectively enhances the charging efficiency of collaborative charging for multiple battery packs while ensuring charging safety.

## Description

### Technical Field

The present disclosure relates to the field of unmanned aerial vehicles, particularly to a collaborative battery pack charging method, device, and computer-readable storage medium.

### Background Technology

Existing aircraft power systems mostly employ a detachable single battery pack. When charging is required, the single battery pack is removed and charged using a non-communicative charger. This system has the following drawbacks: Firstly, using a single battery pack means that if the battery pack fails, the aircraft will crash due to loss of power. Secondly, the detachable design of the battery pack adds extra weight and design complexity to the aircraft, increasing the failure rate. Thirdly, during the charging process of the battery pack, there is no state communication between the battery pack and the charger, which can lead to battery swelling and fire hazards if charging continues despite a battery pack failure. Fourthly, a single charger cannot charge multiple battery packs simultaneously.

To address these technical issues, current aircrafts are being equipped with multiple battery packs to form a power redundancy backup, under the premise of ensuring high safety. However, relying on existing charger solutions, on the one hand, each charger can only independently charge a single battery pack, failing to address the charging issues associated with the single battery pack. On the other hand, a single charger cannot effectively perform collaborative charging of multiple battery packs, resulting in low charging efficiency.

In summary, how to control collaborative charging of multiple battery packs while enhancing charging efficiency under the premise of ensuring charging safety has become a technical problem that needs to be solved urgently.

### Summary of Invention

### Technical Issue

The present disclosure provides a collaborative charging method, device, and computer-readable storage medium for battery packs to address the issue of enhancing charging efficiency while ensuring charging safety.

### Technical Solution

To overcome the technical deficiencies in the prior art, the present disclosure proposes a collaborative battery pack charging method, which includes:
when the battery packs are connected to a charger, calculating charging requirement of the battery packs through state data of the battery packs collected by a charging control module, and obtaining parameter data of the battery packs;
when the battery packs are in a normal working state, detecting whether specification data of the battery packs matches the parameter data, and when matched, controlling activation of a charging switch for each battery pack according to the mutual relationships of respective voltages of the battery packs; and
detecting and adjusting a total charging current for all battery packs and a charging current for each battery pack according to calculated aggregated current requirement, and sending the total charging current and a charging state of the battery pack to the charger to enable the charger to stop outputting when the battery pack are fully charged.

The present disclosure also proposes a collaborative charging device for battery packs, which includes a memory, a processor, and a computer program stored on the memory and executable on the processor. When executed by the processor, the computer program implements the steps of the collaborative battery pack charging method described in any one of the above.

Furthermore, the present disclosure proposes a computer-readable storage medium storing a collaborative charging program for battery packs. When executed by a processor, the collaborative charging program implements the steps of the collaborative battery pack charging method described in any one of the above.

### Beneficial Effects

By implementing the collaborative battery pack charging method, device, and computer-readable storage medium of the present disclosure, when the battery packs are connected to a charger, the charging requirement of the battery packs are calculated through state data of the battery packs collected by a charging control module, and parameter data of the battery packs are obtained. When the battery packs are in a normal working state, whether the specification data of the battery packs matches the parameter data are detected, and when matched, the activation of a charging switch for each battery pack is controlled according to the mutual relationships of respective voltages of the battery packs. The total charging current for all battery packs and the charging current for each battery pack are detected and adjusted according to the calculated aggregated current requirement, and the total charging current and the charging state of the battery packs are sent to the charger to enable it to stop outputting when the battery packs are fully charged. The present disclosure effectively enhances the charging efficiency of collaborative charging for multiple battery packs under the premise of ensuring charging safety.

### Description of the Drawings

The present disclosure will be further described below with reference to the accompanying drawings and embodiments, in which:
FIG. 1 is a flowchart of the first embodiment of the collaborative battery pack charging method according to the present disclosure;
FIG. 2 is a flowchart of the second embodiment of the collaborative battery pack charging method according to the present disclosure;
FIG. 3 is a flowchart of the third embodiment of the collaborative battery pack charging method according to the present disclosure;
FIG. 4 is a flowchart of the fourth embodiment of the collaborative battery pack charging method according to the present disclosure;
FIG. 5 is a flowchart of the fifth embodiment of the collaborative battery pack charging method according to the present disclosure;
FIG. 6 is a flowchart of the sixth embodiment of the collaborative battery pack charging method according to the present disclosure;
FIG. 7 is a flowchart of the seventh embodiment of the collaborative battery pack charging method according to the present disclosure;
FIG. 8 is a flowchart of the eighth embodiment of the collaborative battery pack charging method according to the present disclosure;
FIG. 9 is a connection diagram of multiple battery packs and a charger in the second embodiment of the collaborative battery pack charging method according to the present disclosure; and
FIG. 10 is an internal structural logic diagram of each battery pack in the second embodiment of the collaborative battery pack charging method according to the present disclosure.

### Implementation Methods of Invention

It should be understood that the specific embodiments described herein are intended solely to illustrate the invention and do not limit its scope.

In subsequent descriptions, suffixes such as "module," "component," or "unit" used to refer to elements are solely for the convenience of explanation and do not carry inherent significance. Therefore, these terms may be used interchangeably.

### Embodiment 1

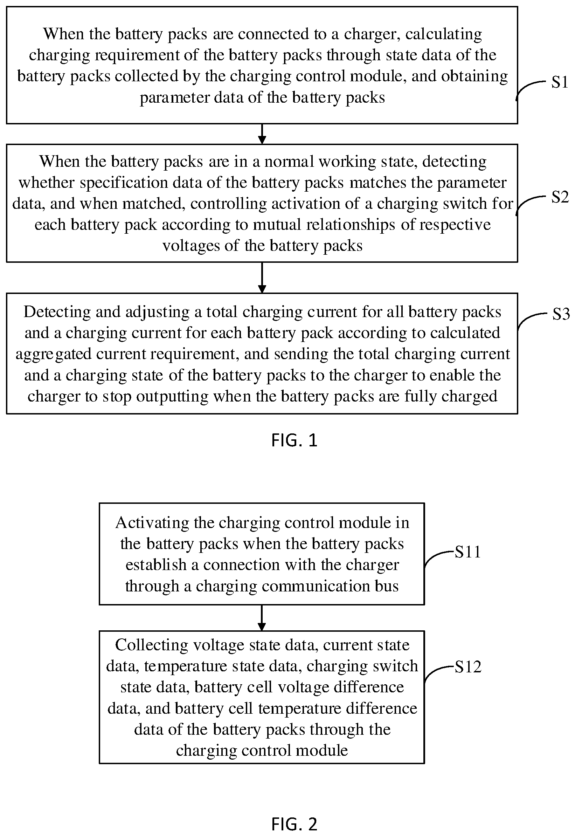

FIG. 1 is a flowchart of the first embodiment of the collaborative battery pack charging method according to the present disclosure. A collaborative battery pack charging method, includes:
S1, when the battery packs are connected to a charger, calculating the charging requirement of the battery packs through state data of the battery packs collected by a charging control module, and obtaining parameter data of the battery packs;
S2, when the battery packs are in a normal working state, detecting whether the specification data of the battery packs matches the parameter data, and when matched, controlling the activation of a charging switch for each battery pack according to the mutual relationships of respective voltages of the battery packs; and
S3, detecting and adjusting the total charging current for all battery packs and the charging current for each battery pack according to the calculated aggregated current requirement, and sending the total charging current and the charging state of the battery packs to the charger to enable it to stop outputting when the battery packs are fully charged.

In this embodiment, considering the flight safety requirements of manned aerial vehicles, multiple battery packs are typically configured to power the aircraft, ensuring that it can maintain normal operation even if some battery packs fail. To address the charging safety and efficiency issues associated with multiple battery packs, this embodiment proposes a control scheme for parallel and collaborative charging of multiple battery packs.

In this embodiment, multiple battery packs of an aircraft are connected to a charger. Optionally, the battery packs can be connected to the charger in sequence; or, after the multiple battery packs are connected to each other, they are connected to the charger together. Optionally, the power system of an aircraft includes multiple battery packs, and the multiple battery packs are charged on a single charger; or, multiple aircrafts have power systems with identical specifications, and multiple battery packs of multiple power systems are charged on a single charger.

In this embodiment, the power system of an aircraft includes multiple battery packs, and the multiple battery packs are connected by an internal communication bus. When the multiple battery packs are connected to the charger, the multiple battery packs still maintain the connection of the internal communication bus.

In this embodiment, the power system of an aircraft includes multiple battery packs, and the positive terminals of the multiple battery packs are connected together, and the negative terminals of the multiple battery packs are also connected together. When the multiple battery packs are connected to the charger, the connected positive terminals are connected to the positive output port of the charger, and similarly, the connected negative terminals are connected to the negative output port of the charger.

In this embodiment, the power system of an aircraft includes multiple battery packs, each of which includes a first charging communication interface, and the charger includes a second charging communication interface. When multiple battery packs are connected to the charger, the first charging communication interface of any battery pack is connected to the second charging communication interface of the charger; the charging control module of the battery pack is activated through the connection; and the charging control program run by the charging control module controls the charging of the multiple battery packs.

In this embodiment, when multiple battery packs are connected to the charger, the charging requirement of the battery packs is calculated through the state data of the battery packs collected by the charging control module, and the parameter data of the battery pack is obtained; wherein, the state data of all battery packs are collected by the charging control module of one battery pack, and the state data includes the attribute state of the battery pack itself, such as the battery cell voltage, the temperature of each temperature monitoring point, and the activation state of the charging switch. In this embodiment, the charging requirement of all battery packs is calculated according to the state data, and the charging requirement includes the charging voltage requirement and the charging current requirement. After calculating the charging requirement of all battery packs, the working state of all battery packs is detected according to the parameter data of all battery packs and the charging requirement to determine whether the current working state of the battery pack can meet the calculated charging requirement based on the current parameter data. If the current working state of the battery pack can meet the current charging requirement, the current working state is determined to be a normal working state, that is, multiple battery packs currently have charging conditions, otherwise, it is determined that multiple battery packs currently do not have charging conditions.

In this embodiment, when it is determined that multiple battery packs are in a normal working state, it is detected whether the specification data of multiple battery packs match the above parameter data, and when they match, the charging switch of the battery pack is turned on; wherein, the specification data of multiple battery packs is the design specification of each component of the battery pack, for example, the maximum current, voltage, temperature and other parameters that each component can withstand. In this embodiment, if it is detected that the specification data matches the above parameter data, it can be ensured that the safety requirements of charging are met, that is, the charging switch of the battery pack is turned on. In this embodiment, the mutual relationship between the voltages of each of the battery pack is first obtained, and then the activation timing of the charging switch of each of the battery pack is controlled according to the mutual relationship. For example, the voltage relationship of each battery pack is determined according to the mutual relationship, and according to the voltage relationship, the battery pack with lower voltage is charged first, and then the battery pack with higher voltage is charged. Optionally, when the battery pack with lower voltage is charged to the same voltage as the battery pack with higher voltage, the battery pack with higher voltage is charged, thereby balancing the charging state of each battery pack, maintaining charging safety, and enhancing the collaborative charging efficiency of multiple battery packs.

In this embodiment, the total charging current of all the battery pack and the charging current of each battery pack are detected and adjusted according to the calculated aggregated current requirement, and the total charging current and the charging state of the battery pack are sent to the charger, so that the charger stops outputting when the battery pack is fully charged. According to the analysis and judgment of the aggregated current requirement, on the one hand, it is determined whether the total charging current of all battery pack exceeds the design limit of the charger, and whether the total charging current exceeds the load capacity of the current power grid, and on the other hand, it is determined whether the charging current of each battery pack exceeds the design specification of a single battery pack, thereby determining the safety and effectiveness of the charging process from the above two aspects. In this embodiment, the real-time charging state is sent to the charger by the charging control module, on the one hand, the charger stops outputting when the battery pack is fully charged, and on the other hand, when the charger detects charging abnormality, it can actively stop charging output.

In this embodiment, when the battery packs are connected to the charger, the charging requirement of the battery packs is calculated through the state data of the battery packs collected by the charging control module, and the parameter data of the battery packs is obtained; when the battery packs are in a normal working state, it is detected whether the specification data of the battery packs matches the parameter data, and the charging switch of the battery packs is turned on when they match, wherein turning on of the charging switch of each battery pack is controlled according to the mutual relationship of the voltage of each battery pack; the total charging current of all the battery packs and the charging current of each battery pack are detected and adjusted according to the calculated aggregated current requirement, and the total charging current and the charging state of the battery packs are sent to the charger, so that the charger stops outputting when the battery packs are fully charged. This embodiment effectively enhances the charging efficiency of collaborative charging of multiple battery packs while ensuring charging safety.

### Embodiment 2

FIG. 2 is a flow chart of the second embodiment of the collaborative battery pack charging method of the present disclosure. Based on the above embodiment, when the battery packs are connected to the charger, the charging requirement of the battery packs is calculated through the state data of the battery packs collected by the charging control module, and the parameter data of the battery packs is obtained, including:
S11, when the battery packs establish a connection with the charger through the charging communication bus, the charging control module in the battery packs is activated;
S12, the voltage state data, current state data, temperature state data, charging switch state data, battery cell pressure difference data and battery cell temperature difference data of the battery packs are collected through the charging control module.

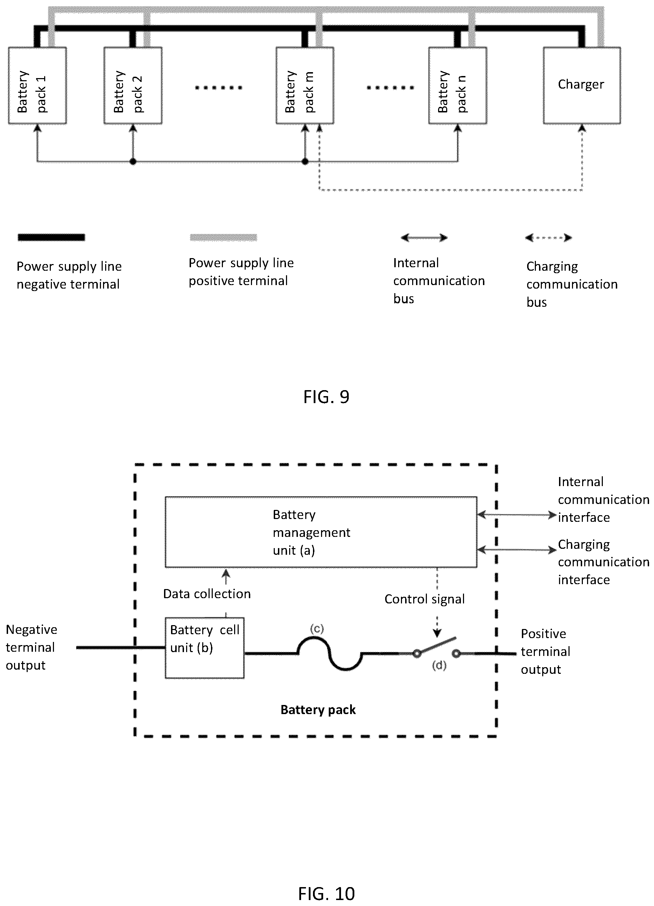

In this embodiment, please refer to FIG. 9, which shows the connection relationship between multiple battery packs and the chargers; wherein, each battery pack is connected to each negative terminal through a power supply line (the thick black line is the power supply line connecting each negative terminal), and is connected to each positive terminal through a power supply line (the thick gray line is the power supply line connecting each positive terminal). The battery pack are interconnected through an internal communication bus (the thin black line with an arrow is the internal communication bus), and each battery pack is connected to the charger through a charging communication bus (the black line segment with an arrow is the charging communication bus).

In this embodiment, please refer to FIG. 10, which shows the internal structure logic of each battery pack. Each battery pack includes a battery cell unit (b), a control switch (d), a fuse (c) and a battery management unit (a). It should be noted that the charging control module of the battery pack is integrated in the battery management unit, and the functions of the battery management unit include collecting battery cell data, calculating charging requirement, generating alarm information and sending design parameters. It should be noted that the above-mentioned collection of battery cell data, calculation of charging requirement, generation of alarm information and sending of design parameters are first completed by the battery management unit of each battery pack itself, and then these initial data are sent to the battery pack with the activated charging control module through the internal communication bus connected to each battery pack for aggregated processing. Optionally, the charging control module in a battery pack is activated first, and then the charging control module receives the above-mentioned initial data sent by other battery packs. In this embodiment, the battery management unit of each battery pack reserves the program functions contained in the charging control module, but only when a battery pack is connected to the charger through the charging communication bus, the functions contained in the charging control module of the battery pack will be activated. That is, when the battery pack establishes a connection to the charger through the charging communication bus, the charging control module in the battery pack is activated.

In this embodiment, the voltage state data, current state data, temperature state data, charging switch state data, battery cell pressure difference data and battery cell temperature difference data of the battery pack are collected by the charging control module. For example, the voltage of each battery cell of each battery pack is collected by the charging control module, the temperature of each temperature monitoring point, the temperature of the battery management unit circuit board, the current of each battery pack, the voltage of each key node, and the relay state are collected, and the charging control module is also used to calculate the data such as the voltage of each battery cell, the maximum and minimum values of the battery cell temperature, and the pressure difference of each battery cell.

The beneficial effect of this embodiment is that when the battery pack and the charger are connected through the charging communication bus, the charging control module in the battery pack is activated; the voltage state data, current state data, temperature state data, charging switch state data, battery cell pressure difference data and battery cell temperature difference data of the battery pack are collected by the charging control module. This embodiment provides a data collection basis based on charging condition determination for effectively enhancing the charging efficiency of multiple battery packs for collaborative charging.

### Embodiment 3

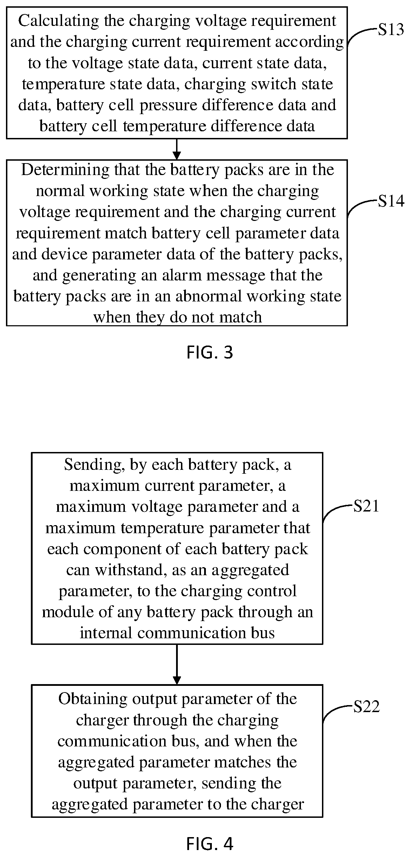

FIG. 3 is a flow chart of the third embodiment of the collaborative battery pack charging method of the present disclosure. Based on the above embodiment, when the battery pack is connected to the charger, the charging requirement of the battery pack is calculated through the state data of the battery pack collected by the charging control module, and the parameter data of the battery pack is obtained, further includes:
S13. the charging voltage requirement and the charging current requirement are calculated according to the voltage state data, the current state data, the temperature state data, the charging switch state data, the battery cell pressure difference data and the battery cell temperature difference data;
S14, when the charging voltage requirement and the charging current requirement match the battery cell parameter data and the device parameter data of the battery pack, it is determined that the battery pack is in the normal working state, and when they do not match, an alarm message that the battery pack is in an abnormal working state is generated.

In this embodiment, when calculating the current charging requirement of multiple battery packs, first, the specification parameters of the battery cell units, relays, fuses and other components of the multiple battery packs are obtained, and then, the charging voltage requirement and the charging current requirement of the multiple battery packs are calculated in combination with the collected parameter data such as the voltage and temperature of the battery packs.

In this embodiment, during the determination and generation of the alarm information, first, according to the battery pack data collected by the above-mentioned charging control module and the specification parameters of each component of the battery packs, it is judged whether there is data exceeding the reasonable range of the specification parameters, whether each component is working in the correct way, and if the parameters are abnormal or the working state is abnormal, the alarm information is generated.

The beneficial effect of this embodiment is that the charging voltage requirement and the charging current requirement are calculated by the voltage state data, the current state data, the temperature state data, the charging switch state data, the battery cell pressure difference data and the battery cell temperature difference data; when the charging voltage requirement and the charging current requirement match the battery cell parameter data and the device parameter data of the battery pack, it is determined that the battery pack is in the normal working state, and when they do not match, an alarm message that the battery pack is in an abnormal working state is generated. This embodiment provides a working state determination scheme based on battery pack data and charging requirement, effectively enhancing the charging efficiency of multiple battery packs for collaborative charging, and further optimizes the safety determination logic before charging.

### Embodiment 4

FIG. 4 is a flow chart of the fourth embodiment of the collaborative battery pack charging method of the present disclosure. Based on the above embodiment, when the battery pack is in a normal working state, the specification data of the battery pack is detected to see whether the parameter data matches the specification data of the battery pack, which specifically includes:
S21, each battery pack sends the maximum current parameter, maximum voltage parameter and maximum temperature parameter that each component of each battery pack can withstand as an aggregated parameter to the charging control module of any battery pack through the internal communication bus;
S22, the output parameter of the charger is obtained through the charging communication bus, and when the aggregated parameter matches the output parameter, the aggregated parameter is sent to the charger.

In this embodiment, the design parameters of each battery pack are obtained through the above charging control module, and the design parameters specifically include the maximum current, voltage, temperature and other parameters that each component of the battery pack can withstand, and the design parameters are sent from each battery pack to the charging control module of a battery pack through the internal communication bus.

In this embodiment, the information is aggregated through the above charging control module, that is, the current, voltage, temperature, power, charging requirement, design parameters and other data of all battery packs are collected through the internal communication bus as the aggregated parameters of this embodiment.

In this embodiment, after the charging control module obtains the aggregated parameters, it performs parameter identification with the charger. Specifically: First, the charging control module exchanges information with the charger through the charging communication bus to determine whether the protocol version number, the charger output voltage range, the current range, and whether they match the specifications of each battery pack. At the same time, the design parameters of the battery pack are sent to the charger.

In this embodiment, the charger issues a fault prompt or alarm message, when necessary, for example, to determine whether each battery pack has an alarm or fault that is not suitable for charging. If so, a corresponding fault prompt or alarm message is generated.

It can be seen that in this embodiment, each battery pack independently monitors its own data, generates alarm information independently, and calculates charging requirement independently. The charging control module aggregates the data and controls all battery packs to charge, thereby realizing effective collaborative charging control of multiple battery packs.

The beneficial effect of this embodiment is that each battery pack sends the maximum current parameter, maximum voltage parameter and maximum temperature parameter that each component of each battery pack can withstand as aggregated parameters to the charging control module of any battery pack through the internal communication bus through each battery pack; the output parameter of the charger is obtained through the charging communication bus, and when the aggregated parameter matches the output parameter, the aggregated parameter is sent to the charger. This embodiment provides a parameter verification method to effectively enhance the charging efficiency of multiple battery packs for collaborative charging, ensuring compliance and safety before charging.

### Embodiment 5

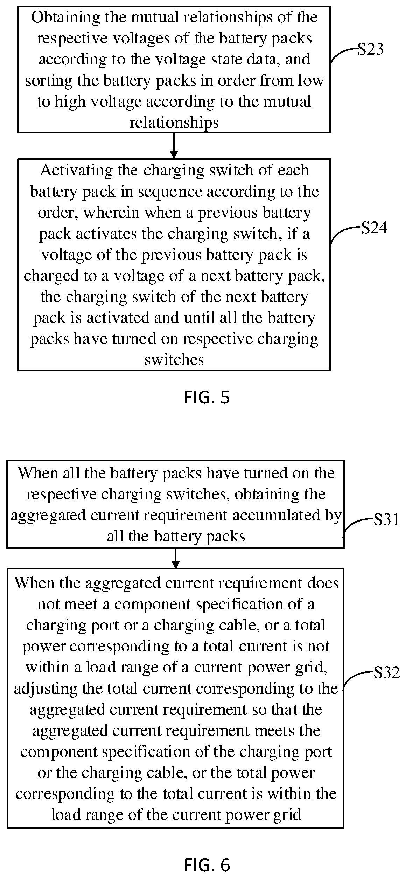

FIG. 5 is a flow chart of the fifth embodiment of the collaborative battery pack charging method of the present disclosure. Based on the above embodiment, the control of the activation of the charging switch of each battery pack according to the mutual relationship of the voltage of each battery pack specifically includes:
S23, obtaining the mutual relationship between the voltages of each battery pack according to the voltage state data, and sorting the battery pack in order from low to high voltage according to the mutual relationship;
S24, activating the charging switch of each battery pack in sequence according to the order, wherein when the previous battery pack activates the charging switch, if the voltage of the previous battery pack is charged to the voltage of the next battery pack, the charging switch of the next battery pack is activated and until all the battery packs have turned on their respective charging switches.

In this embodiment, according to the voltage of each battery pack, the charging switch of the battery pack with the lowest voltage is turned on first to charge, and when the voltage of the battery pack is charged to the same voltage as the second lowest battery pack, the charging switch of the second battery pack is turned on, and the two battery packs are charged together. Similarly, after all the charging switches are turned on, all battery packs are charged together.

Optionally, in this embodiment, the charging switch is a relay or other MOS field effect transistor device that acts as a switch.

In this embodiment, the relay is turned on in sequence from low to high voltage. First, distributed charging of each battery pack is performed. Then, a synchronous charging control strategy is implemented when their voltages are consistent. This can realize the parallel charging of batteries with different voltages, thereby enhancing the charging balance and charging efficiency.

The beneficial effect of this embodiment is that the mutual relationship between the voltages of each battery pack is obtained through the voltage state data, and the battery pack are sorted in order from low to high voltage according to the mutual relationship; the charging switches of each battery pack are activated in sequence according to the order, wherein when the charging switch of the previous battery pack is activated, if the voltage of the previous battery pack is charged to the voltage of the next battery pack, the charging switch of the next battery pack is activated, until all the battery packs have turned on their respective charging switches. This embodiment provides charging balance control of each battery pack for realizing the collaborative charging of multiple battery packs, and optimizes the charging coordination logic when each battery pack is charged in a collaborative manner.

### Embodiment 6

FIG. 6 is a flow chart of the sixth embodiment of the collaborative battery pack charging method of the present disclosure. Based on the above embodiment, the total charging current of all the battery packs and the charging current of each battery pack are detected and adjusted according to the calculated aggregated current requirement, and the total charging current and the charging state of the battery pack are sent to the charger, so that the charger stops outputting when the battery pack is fully charged, including:
S31. When all the battery packs have turned on their respective charging switches, the aggregated current requirement accumulated by all the battery packs is obtained;
S32. When the aggregated current requirement does not meet the component specification of the charging port or charging cable, or the total power corresponding to the total current is not within the load range of the current power grid, the total current corresponding to the aggregated current requirement is adjusted so that the aggregated current requirement meets the component specification of the charging port or charging cable, or the total power corresponding to the total current is within the load range of the current power grid.

In this embodiment, the total charging voltage and total charging current requirement are calculated by the above charging control module, the charging current requirement of all the battery pack with the relays turned on is accumulated, and the charging voltage requirement of all the battery packs with the relays turned on is counted by taking the minimum value.

In this embodiment, the charging control module is used to determine whether the present current is too large, for example, to determine whether the current of each battery pack exceeds its own requirement, whether the total current exceeds the design specifications of components such as the charging port and the charging cable, and whether the total power exceeds the preset load capacity of the power grid.

The beneficial effect of this embodiment is that when all the battery packs have turned on their respective charging switches, the aggregated current requirement of all the battery packs is obtained; when the aggregated current requirement does not meet the component specification of the charging port or the charging cable, or the total power corresponding to the total current is not within the load range of the current power grid, the total current corresponding to the aggregated current requirement is adjusted so that the aggregated current requirement meets the component specification of the charging port or the charging cable, or the total power corresponding to the total current is within the load range of the current power grid. This embodiment ensures that when multiple battery packs are charged simultaneously, the total current will not exceed the design load of components such as the charging port, the charging cable, and the charger, thereby ensuring charging safety.

### Embodiment 7

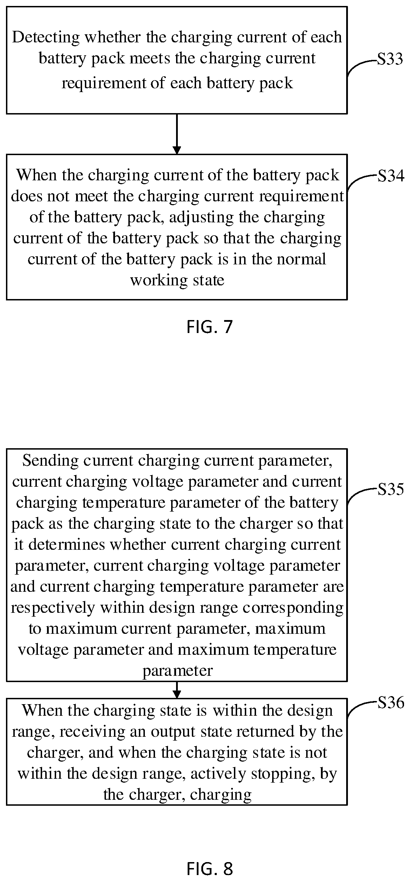

FIG. 7 is a flow chart of the seventh embodiment of the collaborative battery pack charging method of the present disclosure. Based on the above embodiment, the total charging current of all the battery packs and the charging current of each battery pack are detected and adjusted according to the calculated aggregated current requirement, and the total charging current and the charging state of the battery pack are sent to the charger, so that the charger stops outputting when the battery pack is fully charged, which further includes:
S33, detecting whether the charging current of each battery pack meets the charging current requirement of each battery pack;
S34, when the charging current of the battery pack does not meet the charging current requirement of the battery pack, adjusting the charging current of the battery pack so that the charging current of the battery pack is in the normal working state.

In this embodiment, one way is to adjust the total current requirement during charging through the above charging control module, for example, reduce the total current requirement, ensure that the current of each battery pack does not exceed the required current of the battery pack itself, ensure that the total current does not exceed the specifications of the charging port, charging cable, and charger, and ensure that the total power does not exceed the load capacity of the preset power grid.

In this embodiment, another way is to adjust the charging current requirement of the battery pack with excessive single-cell current through the above-mentioned charging control module, for example, reduce the current requirement of a certain battery pack to ensure that the current of the battery pack does not exceed the required current of the battery pack itself, and at the same time, ensure that the total current does not exceed the specifications of the charging port, charging cable, and charger, and ensure that the total power does not exceed the load capacity of the preset power grid.

The beneficial effect of this embodiment is that by detecting whether the charging current of each battery pack meets the charging current requirement of each battery pack; when the charging current of the battery pack does not meet the charging current requirement of the battery pack, the charging current of the battery pack is adjusted so that the charging current of the battery pack is in the normal working state. This embodiment monitors the current of each battery pack, and by adjusting the total charging current, the current of each battery pack does not exceed the required current, thereby further ensuring charging safety.

### Embodiment 8

FIG. 8 is a flow chart of the eighth embodiment of the collaborative battery pack charging method of the present disclosure. Based on the above embodiment, the total charging current of all the battery packs and the charging current of each battery pack are detected and adjusted according to the calculated aggregated current requirement, and the total charging current and the charging state of the battery pack are sent to the charger, so that the charger stops outputting when the battery pack is fully charged, which further includes:
S35, sending the current charging current parameter, current charging voltage parameter and current charging temperature parameter of the battery packs as the charging state to the charger, so that the charger determines whether the current charging current parameter, the current charging voltage parameter and the current charging temperature parameter are respectively within the design range corresponding to the maximum current parameter, the maximum voltage parameter and the maximum temperature parameter;
S36, when the charging state is within the design range, receiving the output state returned by the charger, and when the charging state is not within the design range, the charger actively stops charging.

In this embodiment, the charging control module sends the charging requirement and battery state to the charger, for example, sends the adjusted charging voltage and current requirement to the charger, and sends data of each battery pack to the charger such as the voltage, current, temperature, and power such that the charger can determine whether the battery pack exceeds the designed parameter range. Optionally, the charger can also actively stop charging when an abnormality is found.

In this embodiment, in order to obtain whether the current charging state of the charger is normal, when the charger returns the output state of the charger, the charging control module determines whether the current output of the charger is abnormal according to the output state.

In this embodiment, the charging control module determines whether the charger is currently fully charged or whether charging needs to be stopped according to one or more of the current charging current parameters, the current charging voltage parameters, and the current charging temperature parameters; wherein, when the charger is currently fully charged or charging needs to be stopped, the charging control module sends a control instruction to the charger to actively stop charging.

In this embodiment, the charging control module sends one or more of the current charging current parameters, the current charging voltage parameter, and the current charging temperature parameter to the charger, and the charger determines whether the battery is currently fully charged or whether charging needs to be stopped; wherein, when the battery is currently fully charged or charging needs to be stopped, the charger issues a control instruction to actively stop charging.

In this embodiment, when the charging control module identifies that the internal communication bus of each battery pack is interrupted, or the charging communication bus of each battery pack and the charger is interrupted, that is, when the communication between any battery pack and the charging control module is interrupted, or the communication between the charging control module and the charger is interrupted, charging is stopped immediately to ensure the safety of charging.

In this embodiment, when the operator stops charging on the flight equipment, or the charging control module detects that the battery pack is fully charged, or the charging control module detects that the battery pack is abnormal, or the charging control module detects that the charger is abnormal, the charging control module issues a control instruction to end charging, and the charger is controlled to turn off its own relay through the control instruction to stop outputting, and at the same time, all battery packs are controlled to turn off their own relays.

In this embodiment, when the operator stops charging on the charger, or the charger detects a charging fee settlement operation, or the charger detects an abnormal operation of itself, or the charger detects an abnormal operation of the battery pack, the charger sends a control instruction to end charging, and controls all battery packs to turn off their own relays through the control instruction, and at the same time, controls the closing of their own relays to stop outputting.

Further, after the charger stops outputting, the charging control module and the charger perform information exchange such as the reason for ending charging and the charging fee.

The beneficial effect of this embodiment is that the current charging current parameter, the current charging voltage parameter, and the current charging temperature parameter of the battery pack are sent to the charger as the charging state, so that the charger determines whether the current charging current parameter, the current charging voltage parameter, and the current charging temperature parameter are respectively within the design range corresponding to the maximum current parameter, the maximum voltage parameter, and the maximum temperature parameter; when the charging state is within the design range, the output state returned by the charger is received, and when the charging state is not within the design range, the charger actively stops charging. Under the premise of ensuring charging safety, this embodiment effectively improves the charging efficiency and charging safety of multiple battery packs for collaborative charging through interactive control between the charging control module and the charger.

### Embodiment 9

Based on the above embodiments, the present disclosure also proposes a collaborative battery pack charging device, which includes a memory, a processor, and a computer program stored in the memory and executable on the processor. When the computer program is executed by the processor, the steps of the collaborative battery pack charging method described in any one of the above are implemented.

It should be noted that the above device embodiment and the method embodiment belong to the same concept. The specific implementation process is detailed in the method embodiment, and the technical features in the method embodiment are applicable to the device embodiment, which will not be repeated here.

### Embodiment 10

Based on the above embodiments, the present disclosure also proposes a computer-readable storage medium, on which a collaborative battery pack charging program is stored. When the collaborative battery pack charging program is executed by a processor, the steps of the collaborative battery pack charging method described in any of the above items are implemented.

It should be noted that the above medium embodiment and the method embodiment belong to the same concept, and the specific implementation process is detailed in the method embodiment, and the technical features in the method embodiment are applicable to the medium embodiment, which will not be repeated here.

It should be noted that in this disclosure, the terms "include", "comprise" or any other variants thereof are intended to cover non-exclusive inclusion, so that a process, method, article or device including a series of elements includes not only those elements, but also other elements not explicitly listed, or also includes elements inherent to such a process, method, article or device. In the absence of further restrictions, an element defined by the sentence "include a..." does not exclude the existence of other identical elements in the process, method, article or device including the element.

The serial numbers of the above embodiments of the present disclosure are only for description and do not represent the advantages and disadvantages of the embodiments.

Through the description of the above implementation methods, those skilled in the art can clearly understand that the above implementation methods can be implemented by means of software plus the necessary general hardware platform, or by hardware, but in many cases the former is a better implementation method. Based on this understanding, the technical solution of the present disclosure in essence, that is, the part that contributes to the prior art, can be embodied in the form of a software product, which is stored in a storage medium (such as ROM/RAM, disk, CD), including several instructions for a terminal (which can be a mobile phone, computer, server, air conditioner, or network equipment, etc.) to execute the methods described in each embodiment of the present disclosure.

The above describes the embodiments of the present disclosure in conjunction with the accompanying drawings, but the present disclosure is not limited to the above specific implementation methods. The above specific implementation methods are only illustrative and not restrictive. Under the teaching of the present disclosure, ordinary skilled in the art can also make many forms without departing from the scope of protection of the present disclosure and the claims, which are all within the protection of the present disclosure.

### Industrial Applicability

The collaborative battery pack charging method, device and computer-readable storage medium provided by the present disclosure, when the battery pack is connected to the charger, the charging requirement of the battery pack is calculated through the state data of the battery pack collected by the charging control module, and the parameter data of the battery pack is obtained; when the battery pack is in a normal working state, it is detected whether the specification data of the battery pack matches the parameter data, and when they match, the charging switch of each battery pack is controlled to be turned on according to the mutual relationship of the voltage of each battery pack; the total charging current of all the battery packs and the charging current of each battery pack are detected and adjusted according to the calculated aggregated current requirement, and the total charging current and the charging state of the battery pack are sent to the charger, so that the charger stops outputting when the battery pack is fully charged. The present disclosure effectively improves the charging efficiency of collaborative charging of multiple battery packs while ensuring charging safety. Therefore, it has industrial applicability.

## Claims

1. A collaborative battery pack charging method, applied to a charging control module of battery packs, the method comprising:
when the battery packs are connected to a charger, calculating charging requirement of the battery packs through state data of the battery packs collected by the charging control module, and obtaining parameter data of the battery packs;
when the battery packs are in a normal working state, detecting whether specification data of the battery packs matches the parameter data, and when matched, controlling activation of a charging switch for each battery pack according to mutual relationships of respective voltages of the battery packs; and
detecting and adjusting a total charging current for all battery packs and a charging current for each battery pack according to calculated aggregated current requirement, and sending the total charging current and a charging state of the battery packs to the charger to enable the charger to stop outputting when the battery packs are fully charged.

2. The collaborative battery pack charging method according to claim 1, wherein when the battery packs are connected to the charger, calculating the charging requirement of the battery packs through the state data of the battery packs collected by the charging control module, and obtaining the parameter data of the battery packs, specifically comprises:
activating the charging control module in the battery packs when the battery packs establish a connection with the charger through a charging communication bus; and
collecting voltage state data, current state data, temperature state data, charging switch state data, battery cell voltage difference data, and battery cell temperature difference data of the battery packs through the charging control module.

3. The collaborative battery pack charging method according to claim 2, wherein when the battery packs are connected to the charger, calculating the charging requirement of the battery packs through the state data of the battery packs collected by the charging control module, and obtaining the parameter data of the battery packs, further comprises:
calculating charging voltage requirement and charging current requirement according to the voltage state data, the current state data, the temperature state data, the charging switch state data, the battery cell voltage difference data, and the battery cell temperature difference data; and
determining that the battery packs are in the normal working state when the charging voltage requirement and the charging current requirement match battery cell parameter data and device parameter data of the battery packs, and generating an alarm message that the battery packs are in an abnormal working state when the charging voltage requirement and the charging current requirement do not match the battery cell parameter data and the device parameter data of the battery packs.

4. The collaborative battery pack charging method according to claim 2, wherein when the battery packs are in the normal working state, detecting whether the specification data of the battery packs matches the parameter data, specifically comprises:
sending, by each battery pack, a maximum current parameter, a maximum voltage parameter and a maximum temperature parameter that each component of each battery pack can withstand, as an aggregated parameter, to the charging control module of any battery pack through an internal communication bus; and
obtaining output parameter of the charger through the charging communication bus, and when the aggregated parameter matches the output parameter, sending the aggregated parameter to the charger.

5. The collaborative battery pack charging method according to claim 2, wherein controlling the activation of the charging switch for each battery pack according to the mutual relationships of the respective voltages of the battery packs, specifically comprises:
obtaining the mutual relationships of the respective voltages of the battery packs according to the voltage state data, and sorting the battery packs in order from low to high voltage according to the mutual relationships; and
activating the charging switch of each battery pack in sequence according to the order, wherein when a previous battery pack activates the charging switch, if a voltage of the previous battery pack is charged to a voltage of a next battery pack, the charging switch of the next battery pack is activated and until all the battery packs have turned on respective charging switches.

6. The collaborative battery pack charging method according to claim 5, wherein detecting and adjusting the total charging current for all the battery packs and the charging current for each battery pack according to the calculated aggregated current requirement, and sending the total charging current and the charging state of the battery packs to the charger to enable the charger to stop outputting when the battery packs are fully charged, specifically comprises:
when all the battery packs have turned on the respective charging switches, obtaining the aggregated current requirement accumulated by all the battery packs; and
when the aggregated current requirement does not meet a component specification of a charging port or a charging cable, or a total power corresponding to a total current is not within a load range of a current power grid, adjusting the total current corresponding to the aggregated current requirement so that the aggregated current requirement meets the component specification of the charging port or the charging cable, or the total power corresponding to the total current is within the load range of the current power grid.

7. The collaborative battery pack charging method according to claim 3, wherein detecting and adjusting the total charging current for all the battery packs and the charging current for each battery pack according to the calculated aggregated current requirement, and sending the total charging current and the charging state of the battery packs to the charger to enable the charger to stop outputting when the battery packs are fully charged, further comprises:
detecting whether the charging current of each battery pack meets the charging current requirement of each battery pack; and
when the charging current of the battery pack does not meet the charging current requirement of the battery pack, adjusting the charging current of the battery pack so that the charging current of the battery pack is in the normal working state.

8. The collaborative battery pack charging method according to claim 7, wherein detecting and adjusting the total charging current for all the battery packs and the charging current for each battery pack according to the calculated aggregated current requirement, and sending the total charging current and the charging state of the battery packs to the charger to enable the charger to stop outputting when the battery packs are fully charged, further comprises:
sending a current charging current parameter, a current charging voltage parameter and a current charging temperature parameter of the battery pack as the charging state to the charger, so that the charger determines whether the current charging current parameter, the current charging voltage parameter and the current charging temperature parameter are respectively within a design range corresponding to a maximum current parameter, a maximum voltage parameter and a maximum temperature parameter; and
when the charging state is within the design range, receiving an output state returned by the charger, and when the charging state is not within the design range, actively stopping, by the charger, charging.

9. A collaborative battery pack charging device, comprising a memory, a processor, and a computer program stored on the memory and executable on the processor, wherein the computer program, when executed by the processor, implements steps of the collaborative battery pack charging method according to any one of claims 1 to 8.

10. A computer-readable storage medium having a collaborative battery pack charging program stored thereon, wherein the collaborative battery pack charging program, when executed by a processor, implements steps of the collaborative battery pack charging method according to any one of claims 1 to 8.
